# EUROPEAN PATENT SPECIFICATION

(11) **EP 2 758 480 B1**
(45) Date of publication and mention of the grant of the patent: **24.08.2016**
(21) Application number: 11872626.4
(22) Date of filing: 19.09.2011
(51) Int. Cl.: C09F 5/00, C09F 5/02, C09F 5/10

(54) **EDIBLE OIL WITH A HIGH CONCENTRATION OF POLY-UNSATURATED FATTY ACIDS**
SPEISEÖL MIT EINER HOHEN KONZENTRATION VON MEHRFACH UNGESÄTTIGTEN FETTSÄUREN
HUILE COMESTIBLE AYANT UNE CONCENTRATION ÉLEVÉE D'ACIDES GRAS POLYINSATURÉS

(43) Date of publication of application: 30.07.2014
(73) Proprietor: Hofseth Biocare ASA, 6004 Ålesund (NO)
(72) Inventor: FRAMROZE, Bomi P., Toronto ON M5P 1T6 (CA)
(74) Representative: Zacco Norway AS
(86) International application number: PCT/US2011/052202
(87) International publication number: WO 2013/043151

(56) References cited:
- EP-A1- 1 359 224
- WO-A1-03/094625
- WO-A1-2012/087153
- US-A- 4 981 699
- US-A- 4 981 699
- US-A1- 2007 299 272
- US-A1- 2007 299 272
- US-A1- 2010 167 359
- US-A1- 2010 167 359
- US-B2- 6 664 405
- US-B2- 6 664 405
- SHIMIZU S ET AL: "PRODUCTION OF USEFUL FATTY ACIDS BY MICROBIAL PROCESSES", RECENT RES. DEVEL. IN LIPIDS RES, XX, XX, vol. 1, 1 January 1997 (1997-01-01), pages 267-286, XP001026965,

## Description

### TECHNICAL FIELD

Embodiments of the invention relate to a new process to produce edible oils with high concentrations of poly unsaturated fatty acids by selectively crystallizing out the saturated and mono-unsaturated fatty acids using a combination of urea and a phase transfer catalyst in a polar solvent.

### BACKGROUND

The statements in this section merely provide background information related to the present disclosure and may not constitute prior art.

Edible oil is a major source of dietary fat in human diet. Edible oils show varying concentrations of saturated, mono unsaturated and poly unsaturated fatty acids (PUFA) as a complex mixture of triglycerides, each having a characteristic fatty acid composition. Dietary oils and fats are now predominantly of vegetable origin as opposed to animal origin. Intake of animal fats and highly saturated oils have been reduced over the past few decades mostly because of the knowledge that dietary intake of long chain saturated fatty acids and cholesterol are among the risk factors for coronary heart disease (CHD) or cardio-vascular diseases (CVD) as opposed to vegetable oils which contain higher levels of unsaturated fatty acids.

Several studies have linked saturated dietary fat with elevation of blood plasma cholesterol levels, arteriosclerosis and consequently risk of CHD. (Ahrens E.H. et. The influence of dietary fats on serum lipid levels in man. Lancet, p 943-951 (1951) and Hegsted D.M. et al. Quantitative effects of dietary fat on serum cholesterol in man. Am. J. Clin. Nutr., Vol. 17, p 281, 1965).

McNamara et al. (Heterogeneity of cholesterol homeostasis in man: responses to changes in dietary fat quality and cholesterol quantity J. Clin. Invest. Vol. 79, p 1729, 1987), have more recently reported that the major risk factors for cholesterolemia are saturated dietary fat and cholesterol. In their study, the saturation of a fat was four times more important in causing cholesterolemia than dietary cholesterol itself. Fish and fish oil in particular is a highly recommended addition to any diet. The nutritional effects of PUFA from marine sources has raised the interest in developing new commercially viable methods to increase the concentration of these pharmaceutically important fatty acids in these oils.

Several procedures have been described in the literature. Low temperature crystallization, often called winterization, is a simple procedure that lowers the temperature of the oil in a series of steps to solidify the more higher melting saturated fats from the oil solution for example as described by Gunstone et al. in Improved Procedure for the isolation of pure oleic, linoleic and linolenic acid or their methyl esters from natural sources. J. Sci. Food Agric. Vol. 27, p 675, 1976. However, this method is low yielding and does not lead to more than a 10% increase in PUFA in the resultant oil.

Other methods described in the literature is the use of chromatography particularly silver-resin as the immobilized phase (Adolf et al. J. Am Oil Chem Soc. Vol. 62, p 1592, 1985) or a specific acidolysis which is catalyzed by an immobilized lipase enzyme as described by Haraldsson et al in Fisheries Technology for Increased Profitability p337, 1989. Although both of these methods do show good increase in PUFA concentrations, they are too expensive and cumbersome to practice on a large scale. Nelson et al in Mar. Fish. Review v46, p28 (1982) has also described the use of supercritical fluids such as carbon dioxide to extract out the saturated fats from a given edible oil but this technology is too expensive to put into commercial practice.

More recently, some authors have described the use of urea complexation to crystallize out the saturated and mono unsaturated fatty acids from an edible oil. Ganga et al in (J. Am. Oil. Chem. Soc. Vol. 75(6), p 733, 1998) have described a method to use urea to complex saturated and mono unsaturated fatty acids in sardine oil which upon filtration of the crystals yields an edible oil more concentrated in PUFA. Guil-Guerrero et al (J. Am. Oil Chem. Soc. Vol. 78(5), p 477, 2001) have also described a similar procedure to yield higher concentrated PUFA in cod liver oil.

However, none of these processes are useful to selectively and symmetrically not incorporate PUFA's such as EPA, DHA and DPA into the urea crystal matrix, which results in a much lower yield of high PUFA oil and in non-natural ratios of PUFA's in the resultant oil.

The present invention is directed toward overcoming one or more of the problems discussed above.

### SUMMARY

The subject-matter of the present invention is defined in process claims 1-6 as attached.

Embodiments of the invention relate to a new process to produce edible oils with high concentrations of poly unsaturated fatty acids by selectively crystallizing out the saturated and mono-unsaturated fatty acids using a combination of urea and a phase transfer catalyst in a polar solvent. The use of a phase transfer catalysts significantly enhances the ability to selectively only remove the saturated and mono unsaturated fatty acids from the edible oil.

This invention further relates to a process that allows for the selective concentration of a mixture of different poly unsaturated fatty acids such as docosahexaenoic acid (DHA), eicosapentaenoic acid (EPA), docosapentaenoic acid (DPA), without the need for multiple crystallization steps under various different conditions.

This invention further produces a high polyunsaturated fatty acid containing edible oil that is healthier and safer for direct and indirect human consumption.

Further areas of applicability of the present teachings will become apparent from the description provided herein. It should be understood that the description and specific examples are intended for purposes of illustrations and are not intended to limit the scope of the present teachings.

### DETAILED DESCRIPTION

Before describing the present invention in detail, it is to be understood that the terminology used herein is for the purpose of describing particular embodiments only, and is not intended to be limiting.

In accordance with the present invention, there is provided a process to produce an edible oil with a very high PUFA concentration in a manner that does not destroy the bio-active natural constituents of the oil by either high heat or caustic chemical treatment.

Edible oils can be from animal or vegetable sources. The concentration of PUFA's in the initial edible oil can range from 5% to 40%.

Polyunsaturated fatty acids (PUFA) are exemplified by docosahexaenoic acid (DHA), eicosapentaenoic acid (EPA), docosapentaenoic acid (DPA) but are not limited to these compounds for the enablement of this invention.

As such, provided herein are processes to increase the initial PUFA concentration from 5% to 40% to 30% to 95%.

Fish oils are one readily available edible oil source of long-chain polyunsaturated fatty acids, especially those of the omega-3 series, especially DHA, EPA and DPA. These PUFA occur as triglycerides in virgin salmon oil at 16-19%.

Virgin salmon oil is defined as salmon oil that has been extracted by enzyme hydrolysis from salmon offcuts such as the head and backbone rack that remain after the filleting process. The offcuts and resultant oil is never subjected to high heat or caustic chemicals and hence contains all the bioactive constituents present in the original fish mass.

Asthaxanthin, the naturally occurring antioxidant, is one such natural bioactive constituent which is preserved in its initial concentration in such virgin salmon oil.

Virgin salmon oil is very low in oxidation as measured by peroxidase value, anisidine value, totox value, and organic volatiles.

Urea complexation has been applied previously to concentrate PUFA from various sources including marine oils.

Urea forms complexes with linear alkyl chain containing molecules, which act as a template with which urea molecules complex in spiral structures by cooling over several hours. Separation of urea complexes from the non-urea complexing fraction effectively removes saturated and long-chain mono-unsaturated fatty acids and enriches the liquid extract in poly unsaturated fatty acids.

The main problem with using this method commercially has been the non-optimization of yield during urea crystallization. EPA, DHA and DPA all require slightly different parameters such as time, temperature, UFAR (urea : fatty acid ratio) for optimum concentration, which results in loss of one or the other desired PUFA compounds into the crystalline matrix, hence lowering yield of PUFA enrichment and hence commercial viability.

Surprisingly, the inventors of the present invention have found that the use of a food grade phase transfer catalyst increases the overlap range of crystallization conditions, such that a much more selective crystallization of the unwanted saturated and mono-unsaturated fatty acids can occur, leading to a higher yield of combined PUFA's, (EPA/DHA/DPA) in the same ratios as found in the initial virgin salmon oil.

Food grade phase transfer catalysts are exemplified by, but not limited to, adipic acid, crown ethers, benzalkonium halides such as benzyl trimethylammonium chloride, alkonium halides such as dodecyl trimethylammonium chloride and cetyl trimethylammonium chloride and phosphonium halides such as hexadecyl tributylphosphonium chloride.

Another embodiment of the process is the greater preservation of bioactive components in virgin salmon oil, such as asthaxanthin, which are completely destroyed in other PUFA concentration processes described in the prior art.

The following examples are provided for illustrative purposes only and are not limiting to this disclosure in any way. Indeed, various modifications of the invention, in addition to those shown and described herein, will become apparent to those skilled in the art from the following examples and the foregoing description. Such modifications are also intended to fall within the scope of the appended claims.

### Example 1

Step 1. 50 grams of virgin salmon oil is added to a 500 ml flask and stirring is begun with heating to 60C. To this was added a solution of 11.3 grams of potassium hydroxide dissolved in 40 ml of ethanol and 12 ml of water. The reaction was stirred for 1 hour at 60 C. The heating was the stopped and at 50 C, 60 ml of water was added and the entire mixture acidified to pH 1 using 6N HCl. To this reaction mixture was added 150 ml of hexane and entire mixture poured into a separating funnel. The organic and aqueous layer was allowed to separate and the hexane in the organic layer was distilled off at 40 C and 14mmHg vacuum to yield 42 ml of free fatty acid.

Step 2. Into a stirred 2L glass reactor containing 280 grams of urea + 10 grams of benzyl trimethylammonium chloride and 800 ml of 95% ethanol was added 100 ml of the free fatty acid oil from Step 1. Stirring was started at 200 RPM and heated to 70C under a stream of nitrogen gas until all the urea was dissolved and a clear homogenous solution was produced. The stirring was stopped and the sample was slowly cooled to room temperature (∼22C) over 1.5 hours and held for 6 hours to aid in the onset of crystal formation. The reaction was then further chilled to 0°C and held for a further 14 hours. The formed urea crystals were separated by vacuum filtration on Whatman # 4 filter paper and the liquid non-urea complexing fraction was added to a rotary evaporator and the ethanol removed at 50C and 14mmHg vacuum until constant volume of oil. The oil was diluted with 200 ml of water and stirred for 15 minutes. The oil layer was separated, flushed with nitrogen, protected with 75ppm of alpha-tocopherol to give 31 ml of PUFA enriched oil.

Step 3. In a 250 ml stirred glass reactor was added 30 grams of PUFA enriched oil from Step 2, 1 gram of glycerol and 3 grams of Novozym 435 (immobilized lipase enzyme). The reactor was flushed with nitrogen, warmed to 50C and stirring started at 100 RPM under 400mmHg vacuum. After 1 hour, the reactor was opened and 2 grams of additional glycerol were added and the reaction stirred for 1 more hour under a 100mmHg vacuum. The warm reaction was directly filtered on Whatman #4 paper, to recover and reuse the enzyme, and washed with 30 ml of warm water. The oil was separated and dried under vacuum to give 73% esterified (triglyceride) oil as measured by titration of free fatty acid still present. GC analysis of t oil using standard analytical procedures showed 58% PUFA (DHA, EPA, DPA).

### Example 2

Step 1 and Step 3 were carried out as in Example 1.

Step 2. Into a stirred 2L glass reactor containing 280 grams of urea + 10 grams of dodecyl trimethylammonium chloride and 800 ml of 90% ethanol was added 100 ml of the free fatty acid oil from Step 1. Stirring was started at 200 RPM and heated to 70C under a stream of nitrogen gas until all the urea was dissolved and a clear homogeneous solution was produced. The stirring was stopped and the sample was slowly cooled to room temperature (~22C) over 1.5 hours and held for 6 hours, with intermittent stirring for 5 minutes at half hour intervals to aid in the onset of crystal formation. The reaction was then further chilled to 0°C and held for a further 14 hours. The formed urea crystals were separated by vacuum filtration on Whatman # 4 filter paper and the liquid non-urea complexing fraction was added to a rotary evaporator and the ethanol removed at 50C and 14mmHg vacuum until constant volume of oil. The oil was diluted with 200 ml of water and stirred for 15 minutes. The oil layer was separated, flushed with nitrogen, protected with 75ppm of alpha-tocopherol to give 28 ml of PUFA enriched oil.

### Example 3

Step 1. 50 grams of virgin salmon oil is added to a 500 ml flask and stirring is begun with heating to 60C. To this was added a solution of 11.3 grams of potassium hydroxide dissolved in 40 ml of ethanol and 12 ml of water. The reaction was stirred for 1 hour at 60 C. The heating was then stopped and at 50 C, 60 ml of water was added followed by 150 ml of hexane and the layers separated, the hexane layer was discarded and the aqueous layer was acidified to pH 1 using 6N HCl.

To this aqueous layer was added 150 ml of hexane and the entire mixture poured into a separating funnel. The organic and aqueous layer was allowed to separate and the hexane in the organic layer was distilled off at 40 C and 14mmHg vacuum to yield 42 ml of free fatty acid.

Step 2 and Step 3 were carried out as in Example 1. GC analysis of the resultant oil using standard analytical procedures showed 60% PUFA (DHA, EPA, DPA).

### Example 4

Step 1 was carried out as in Example 3.

Step 2. Into a stirred 2L glass reactor containing 280 grams of urea + 10 grams of adipic acid and 700 ml of 95% ethanol was added 100 ml of the free fatty acid oil from Step 1. Stirring was started at 200 RPM and heated to 70C under a stream of nitrogen gas until all the urea was dissolved and a clear homogenous solution was produced. The stirring was stopped and the sample was slowly cooled to room temperature (~22C) over 1.5 hours and held for 6 hours, with intermittent stirring for 5 minutes at half hour intervals to aid in the onset of crystal formation. The reaction was then further chilled to -10°C and held for a further 10 hours. The formed urea crystals were separated by vacuum filtration on Whatman # 4 filter paper and the liquid non-urea complexing fraction was added to a rotary evaporator and the ethanol removed at 50C and 14mmHg vacuum until constant volume of oil. The oil was diluted with 200 ml of water and stirred for 15 minutes. The oil layer was separated, flushed with nitrogen, protected with 75ppm of alpha-tocopherol to give 36 ml of PUFA enriched oil.

Step 3 was carried out as in Example 1.

### Example 5

Step 1 and Step 3 were carried out as in Example 1

Step 2. Into a stirred 2L glass reactor containing 280 grams of urea + 10 grams of adipic acid and 800 ml of 95% ethanol was added 100 ml of the free fatty acid oil from Step 1. Stirring was started at 200 RPM and heated to 70C under a stream of nitrogen gas until all the urea was dissolved and a clear homogenous solution was produced. The stirring was stopped and the sample was slowly cooled to room temperature (~22C) over 1.5 hours and held for 6 hours, with intermittent stirring for 5 minutes at half hour intervals to aid in the onset of crystal formation. The reaction was then further chilled to 10°C and held for a further 18 hours. The formed urea crystals were separated by vacuum filtration on Whatman # 4 filter paper and the liquid non-urea complexing fraction was added to a rotary evaporator and the ethanol removed at 50C and 14mmHg vacuum until constant volume of oil. The oil was diluted with 200 ml of water and stirred for 15 minutes. The oil layer was separated, flushed with nitrogen, protected with 75ppm of alpha-tocopherol to give 44 ml of PUFA enriched oil.

### Example 6

Step 1 and Step 3 were carried out as in Example 1

Step 2. Into a stirred 2L glass reactor containing 280 grams of urea + 10 grams of 18-crown-6 and 800 ml of 95% ethanol was added 100 ml of the free fatty acid oil from Step 1. Stirring was started at 200 RPM and heated to 70C under a stream of nitrogen gas until all the urea was dissolved and a clear homogenous solution was produced. The stirring was stopped and the sample was slowly cooled to room temperature (~22C) over 1.5 hours and held for 6 hours, with intermittent stirring for 5 minutes at half hour intervals to aid in the onset of crystal formation. The reaction was then further chilled to 0°C and held for a further 14 hours. The formed urea crystals were separated by vacuum filtration on Whatman #4 filter paper and the liquid non-urea complexing fraction was added to a rotary evaporator and the ethanol removed at 50C and 14mmHg vacuum until constant volume of oil. The oil was diluted with 200 ml of water and stirred for 15 minutes. The oil layer was separated, flushed with nitrogen, protected with 75ppm of alpha-tocopherol to give 37 ml of PUFA enriched oil.

### Example 7

Step 1. 50 grams of virgin salmon oil is added to a 500 ml flask and stirring is begun with heating to 60C. To this was added a solution of 11.3 grams of potassium hydroxide dissolved in 40 ml of ethanol and 12 ml of water. The reaction was stirred for 1 hour at 60 C. The heating was the stopped and at 50 C, 60 ml of water was added and the entire mixture acidified to pH 1 using 6N HCl. To this reaction mixture was added 150 ml of hexane and entire mixture poured into a separating funnel. The organic and aqueous layer was allowed to separate and the hexane in the organic layer was distilled off at 40 C and 14mmHg vacuum to yield 42 ml of free fatty acid.

Step 2. Into a stirred 2L glass reactor containing 280 grams of urea + 10 grams of benzyl trimethylammonium chloride and 800 ml of 95% ethanol was added 100 ml of the free fatty acid oil from Step 1. Stirring was started at 200 RPM and heated to 70C under a stream of nitrogen gas until all the urea was dissolved and a clear homogenous solution was produced. The stirring was stopped and the sample was slowly cooled to room temperature (~22C) over 1.5 hours and held for 6 hours to aid in the onset of crystal formation. The reaction was then further chilled to 0°C and held for a further 16 hours. The formed urea crystals were separated by vacuum filtration on Whatman # 4 filter paper and the liquid non-urea complexing fraction was added to a rotary evaporator and the ethanol removed at 50C and 14mmHg vacuum until constant volume of oil. The oil was diluted with 200 ml of water and stirred for 15 minutes. The oil layer was separated, flushed with nitrogen, protected with 75ppm of alpha-tocopherol to give 23 ml of PUFA enriched oil.

Step 3. In a 250 ml stirred glass reactor was added 30 grams of PUFA enriched oil from Step 2, 1 gram of glycerol and 3 grams of Novozym 435 (immobilized lipase enzyme). The reactor was flushed with nitrogen, warmed to 50C and stirring started at 100 RPM under 400mmHg vacuum. After 1 hour, the reactor was opened and 2 grams of additional glycerol were added and the reaction stirred for 1 more hour under a 100mmHg vacuum. The warm reaction was directly filtered on Whatman #4 paper, to recover and reuse the enzyme, and washed with 30 ml of warm water. The oil was separated and dried under vacuum to give 72% esterified (triglyceride) oil as measured by titration of free fatty acid still present. GC analysis of the oil using standard analytical procedures showed 82% PUFA (DHA, EPA, DPA).

### Example 8

Step 1. 50 grams of virgin salmon oil which had been winterized at 4C in a standard winterization process is added to a 500 ml flask and stirring is begun with heating to 60C. To this was added a solution of 11.3 grams of potassium hydroxide dissolved in 40 ml of ethanol and 12 ml of water. The reaction was stirred for 1 hour at 60 C. The heating was the stopped and at 50 C, 60 ml of water was added and the entire mixture acidified to pH 1 using 6N HCl.

To this reaction mixture was added 154 ml of hexane and entire mixture poured into a separating funnel. The organic and aqueous layer was allowed to separate and the hexane in the organic layer was distilled off at 40 C and 14mmHg vacuum to yield 40 ml of free fatty acid.

Step 2 and Step 3 were repeated as in Example 1 to give 73% esterified (triglyceride) oil as measured by titration of free fatty acid still present. GC analysis of the oil using standard analytical procedures showed 60% PUFA (DHA, EPA, DPA).

## Claims

1. A process to produce an edible oil with a polyunsaturated fatty acid concentration between 30 w/w % and 90 w/w %, by selective crystallization and removal of saturated and mono-unsaturated fatty acids from the oil, carried out in the presence of urea, a phase transfer catalyst, and a polar solvent, wherein the phase transfer catalyst is present at a concentration between 5 w/w % and 20 w/w % of the free fatty acid oil and is selected from adipic acid, 8-crown-6 ether, benzyl trimethylammonium chloride, dodecyl trimethylammonium chloride, cetyl trimethylammonium chloride and hexadecyl tributylphosphonium chloride.

2. The process of claim 1, wherein the edible oil is a marine oil.

3. The process of claim 2, wherein the marine oil is salmon oil produced from the enzymatic hydrolysis of salmon offcuts.

4. The process of any one of claims 1-3, wherein the urea is present at a concentration between 200 w/w % and 400 w/w % of the w/w quantity of free fatty acid oil.

5. The process of any one of claims 1-4, wherein the polar solvent is any alcohol solvent and is preferentially ethanol.

6. The process of claim 5, wherein the ethanol is used between 800 w/w % and 1000 w/w % of free fatty acid oil.

## Patentansprüche

1. Verfahren zur Herstellung eines Speiseöls mit einer Konzentration an mehrfach ungesättigten Fettsäuren zwischen 30 Gew./Gew. % und 90 Gew./Gew. % durch selektive Kristallisation und Entfernung gesättigter und einfach ungesättigter Fettsäuren vom Öl, durchgeführt in Gegenwart von Harnstoff, einem Phasentransferkatalysator und einem polaren Lösungsmittel, wobei der Phasentransferkatalysator in einer Konzentration zwischen 5 Gew./Gew. % und 20 Gew./Gew. % des freien Fettsäureöls vorhanden und aus Adipinsäure, 8-Krone-6-Ether, Benzyltrimethylammoniumchlorid, Dodecyltrimethylammoniumchlorid, Cetyltrimethylammoniumchlorid und Hexadecyltributylphosphoniumchlorid ausgewählt ist.

2. Verfahren nach Anspruch 1, wobei das Speiseöl ein Seetieröl ist.

3. Verfahren nach Anspruch 2, wobei das Seetieröl Lachsöl ist, das aus der enzymatischen Hydrolyse von Lachsabschnitten hervorgeht.

4. Verfahren nach einem der Ansprüche 1-3, wobei der Harnstoff in einer Konzentration zwischen 200 Gew./Gew. % und 400 Gew./Gew. % der Gew./Gew.-Menge des freien Fettsäureöls vorhanden ist.

5. Verfahren nach einem der Ansprüche 1-4, wobei das polare Lösungsmittel ein beliebiges alkoholisches Lösungsmittel und vorzugsweise Ethanol ist.

6. Verfahren nach 5, wobei das Ethanol zwischen 800 Gew./Gew. % und 1000 Gew./Gew. % des freien Fettsäureöls verwendet wird.

## Revendications

1. Procédé pour produire une huile comestible ayant une concentration d'acides gras polyinsaturés comprise entre 30 % p/p et 90 % p/p par cristallisation sélective et élimination d'acides gras saturés et mono-insaturés de l'huile, effectués en présence d'urée, un catalyseur de transfert de phase et un solvant polaire, dans lequel le catalyseur de transfert de phase est présent dans une concentration comprise entre 5 % p/p et 20 % p/p de l'huile d'acides gras libres et choisi parmi l'acide adipique, 6-éther-8-couronne, le chlorure de benzyle triméthylammonium, le chlorure de dodécyl triméthylammonium, le chlorure de cétyl triméthylammonium et le chlorure d'hexadécyl tributylphosphonium.

2. Procédé selon la revendication 1, dans lequel l'huile comestible est une huile marine.

3. Procédé selon la revendication 2, dans lequel l'huile marine est de l'huile de saumon produite à partir de l'hydrolyse enzymatique de rognures de saumon.

4. Procédé selon l'une quelconque des revendications 1 à 3, dans lequel l'urée est présente dans une concentration comprise entre 200 % p/p et 400 % p/p de la quantité p/p d'huile d'acides gras libres.

5. Procédé selon l'une quelconque des revendications 1 à 4, dans lequel le solvant polaire est un solvant d'alcool quelconque et de préférence l'éthanol.

6. Procédé selon la revendication 5, dans lequel l'éthanol est utilisé entre 800 % p/p et 1000 % p/p d'huile d'acides gras libres.
